# EUROPÄISCHE PATENTSCHRIFT

(11) **EP 0 474 683 B1**
(45) Veröffentlichungstag und Bekanntmachung des Hinweises auf die Patenterteilung: **18.09.1996**
(21) Anmeldenummer: 90908212.5
(22) Anmeldetag: 23.05.1990
(51) Int. Cl.: H01S 3/109, H01S 3/0941

(54) **FREQUENZVERDOPPELTER LASER**
FREQUENCY-DOUBLED LASER
LASER A FREQUENCE DOUBLEE

(30) Priorität: 01.06.1989 DE 3917902
(43) Veröffentlichungstag der Anmeldung: 18.03.1992
(73) Patentinhaber: ADLAS GMBH & CO. KG, D-23569 Lübeck (DE)
(72) Erfinder: KORTZ, Hans-Peter, D-2409 Pansdorf (DE); WEDEKIND, Dörte, D-2400 Lübeck (DE)
(74) Vertreter: Klunker . Schmitt-Nilson . Hirsch
(86) Internationale Anmeldenummer: EP9000836
(87) Internationale Veröffentlichungsnummer: WO9015460

(56) Entgegenhaltungen:
- JP-A- 1 130 582
- Journal of the Optical Society of America B/Optical Physics, Band 4, Nr. 8, August 1987, Optical Society of America, (Woodbury, NY, US), P.E. PERKINS et al.: "Efficient Intracavity Doubling in Flash-Lamp-Pumped Nd: YLF", seiten 1281-1285
- Optics Letters, Band 14, Nr. 1, 1. Januar 1989, Optical Society of America, (New York, NY, US), R. BURNHAM et al.: "High-Power Diode-Array-Pumped frequency-doubled cw", pages 27-29
- Brunner, W. et al.: Lasertechnik, 3. Auflage, S. 201-203, Hütig- Verlag Heidelberg 1987;
- Applied Physics Letters, Bd. 12, Nr. 9, 1 Mai 1968, S. 306-308.

## Beschreibung

Die Erfindung betrifft einen Laser nach dem Oberbegriff des Anspruchs 1.

Viele interessante Laser liefern Laserlicht, deren Wellenlängen allerdings für viele Anwendungsfälle nicht oder nur schlecht brauchbar ist. Speziell für optische Anwendungen wird sichtbares Laserlicht benötigt. Ein Nd-YAG-Laser liefert zum Beispiel Laserstrahlung mit einer Wellenlänge von 1064 nm. Deshalb versucht man, dieses Laserlicht durch Frequenzverdopplung in sichtbares Licht umzusetzen.

Es sind zahlreiche Vorschläge bekannt, wie eine Frequenzverdopplung von Laserlicht erreicht wird. Zum Beispiel wird dabei ein nicht-linearer Kristall in einem oder außerhalb einesResonator verwendet. Das Laserlicht wird in den Kristall eingekoppelt und am Ausgang des Kristalls erhält man Laserstrahlung mit der doppelten Frequenz. Das Verhältnis der Intensität des Lichts mit der doppelten Frequenz zu der Intensität des Lichts mit der ursprünglichen Laserfrequenz ist jedoch relativ gering; es hängt von der Intensität des in den Kristall gelangenden Laserlichts der Fundamentalwellen-länge ab.

Angesichts dieser Tatsache hat man bislang durchwegs versucht, den nicht-linearen Kristall an einer Stelle anzuordnen, wo eine beträchtliche Intensitätskonzentration vorhanden ist. So ist zum Beispiel in der DE-OS 36 43 648 ein Laser der eingangsgenannten Art vorgeschlagen, bei dem der neben dem nicht-linearen Kristall angeordnete Auskoppelspiegel mit einer konkaven teilverspiegelten Oberfläche ausgebildet ist, um eine möglichst günstige Strahlformung im Resonator zu erhalten. Durch die konkave Spiegelfläche soll eine Fokussierung der Strahlung erreicht werden.

Aus Applied Physics Letters, Bd. 12, Nr. 9, Mai 1968, Seiten 306 bis 309 ist ein Laser mit einer Pumplichtquelle in Form einer Wolfram-Jod-Lampe bekannt, bei dem der Auskoppelspiegel einen relativ großen Krümmungsradius von 10 m hat. Die Arbeitsweise dieses bekannten Lasers mit Wolfram-Jod-Pumplichtlampe beruht auf temperaturabgestimmter Anpassung vom Typ I.

Aus dem Journal of the Optical Society of America B/Optical Physics, Bd. 4, Nr. 8, August 1987, Seiten 1281 bis 1285 ist ein Laser mit einer Pumplichtquelle in Form einer Blitz-Lampe bekannt, bei dem der zweite, als Auskoppelspiegel dienende Spiegel als Planspiegel ausgebildet ist. Ein frequenzverdoppelter Laser mit ebenfalls als Blitzlampe ausgebildeter Pumplichtquelle ist aus der JP-A-1-130 582 bekannt.

Bei der Erfindung gemäß dem Oberbegriff des Anspruchs 1 geht es aber um einen laserdioden-gepumpten Laser mit Frequenzverdoppelung.

Bei praktisch sämtlichen bisher bekannten Vorschlägen für einen frequenzverdoppelten Laser mit Lasserdioden-Pumplichtquelle ist der Auskoppelspiegel in der Nachbarschaft des nicht-linearen Kristalls als konkaver Spiegel ausgebildet.

Dennoch ist die Ausbeute des frequenzverdoppelten Lichts relativ gering. Es kommt zu Intensitätsschwankungen, die sich besonders gravierend im Dauerstrich-Betrieb bemerkbar machen. Es sind starke Intensitätsspitzen zu beobachten.

Es gibt eine Reihe von theoretischen und praktischen Untersuchungen, um die Ursachen für derartige Intensitätsschwankungen erklären und beheben zu können.

Allerdings sind die Bemühungen, die Intensitätsschwankungen, wenn nicht völlig auszuschalten, so doch zumindest zu beseitigen, bislang ohne durchschlagenden Erfolg geblieben.

Der Erfindung liegt die Aufgabe zugrunde, einen Laser der eingangs genannten Art anzugeben, der bei hohem Wirkungsgrad nur geringe Intensitätsschwankungen der frequenverdoppelten Strahlung zeigt.

Diese Aufgabe wird durch die im Anspruch 1 angegebene Erfindung gelöst. Grundsätzlich sieht die Erfingung zwei alternative Möglichkeiten vor. Zunächst wird als unabläßlich angesehen, mit Hilfe eines Polarisators eine eindeutige Polarisation der Grundwelle im Resonator festzulegen, da dies Voraussetzung für einen stabilen Betrieb ist. Der Polarisator ist zwischen dem nicht-linearen Kristall und dem Lasermedium angeordnet.

In einer ersten Ausgestaltung der Erfindung ist vorgesehen, daß der Auskoppelspiegel als konkavspiegel mit extrem großen Krümmungsradius, vorzugsweise als Planspiegel, ausgebildet ist. Die Erfindung weicht also ausdrücklich von dem bislang in der Fachwelt als praktisch unerläßlich angesehenen konkaven Auskoppelspiegel ab. Während früher die Anordnung des nicht-linearen Kristalls im Bereich des Brennpunkts des konkaven Auskoppelspiegels als praktisch unerläßlich angesehen wurde, verzichtet man bei der erfindungsgemäßen Ausgestaltung des Lasers auf die höchstmögliche Lichtintensität in der Mitte des nicht-linearen Kristalls, allerdings wird dieser Verzicht mehr als wett gemacht durch einen Gewinn, der auf die Vermeidung einer unerwünschten Strahlversetzung innerhalb des nicht-linearen Kristalls zurückzuführen ist. Dies soll im folgenden näher erläutert werden:

Das in den nicht-linearen Kristall eintretende Licht wird, wie bekannt, im allgemeinen Fall in zwei außerordentliche Strahlen aufgeteilt, die zueinander senkrecht polarisiert sind. In dem Spezialfall der uniaxialen Kristalle sind dies die bekannten ordentlichen und außerordentlichen Teilstrahlen. Bei dem hier behandelten Typ II der Frequenzverdopplung sind die Intensitäten der beiden Strahlen etwa gleich groß, da der dem Kristall vorgeschaltete Polarisator das Licht in einer Richtung polarisiert, die zu den beiden Polarisationsrichtungen einen Winkel von 45° bildet. Beide Strahlen gehorchen unterschiedlichen Berechnungsgesetzen und werden relativ zueinander seitlich abgelenkt und treten versetzt aus dem Kristall aus. Treffen diese Strahlen nun auf den Hohlspiegel, so kann nur einer der beiden in sich zurückreflektiert werden, während der andere zur Seite abgelenkt wird, so daß beträchtliche nutzbare Strahlenleistung verlorengeht. Durch die erfindungsgemäße Maßnahme, als Auskoppelspiegel einen konkavspiegel mit extrem großem krümmungsradius, vorzugsweise einen Planspiegel, zu verwenden, geht im Gegensatz zur Verwendung eines Hohlspiegels keine Strahlintensität mehr verloren.

Die erfindungsgemäße Maßnahme schließt aber nicht aus, daß andere fokussierende Mittel vorgesehen sein können, so kann man beispielsweise in Übereinstimmung mit dem Stand der Technik den ersten Spiegel vor dem Lasermedium als bezüglich des Resonators konkaven Spiegel ausbilden.

In einer alternativen Ausführungsform der Erfindung, die beliebige gekrümmte Auskoppelspiegel erlaubt, jedoch die Möglichkeit des Planspiegels als Auskoppelspiegel ausdrücklich miteinschließt, können zur Vermeidung der oben erläuterten Strahlversetzungen zwei nicht-lineare Kristalle hintereinander angeordnet werden, wobei diese Kristalle um die Strahlenachse um 90° gegeneinander verdreht sind. Durch diese Maßnahme wird von dem zweiten Kristall die in dem ersten Kristall erfolgende Strahlversetzung der in den Kristallen unterschiedlich verlaufenden Teilstrahlen zueinander wieder aufgehoben.

Dadurch, daß ein seitliches Austreten des außerordentlichen Strahls aus der optischen Achse vermieden wird, werden sowohl Verluste weitestgehend ausgeschaltet als auch ein Anlaß zum Anschwingen höherer transversaler Moden vermieden.

Um als nutzbare frequenzverdoppelte Strahlung möglichst Laserlicht mit einer einzigen Frequenz zur Verfügung zu haben, nämlich einer Frequenz, die dem zweifachen der Laser-Grundfrequenz entspricht, sollte der Auskoppelspiegel des Resonators für die frequenzverdoppelte Strahlung eine höhere Durchlässigkeit aufweisen als für die Laser-Grundfrequenz. Im Idealfall sollte der Auskoppelspiegel für die Grundfrequenz des Lasers praktisch undurchlässig sein.

Im folgenden werden Ausführungsbeispiele der Erfindung anhand der Zeichnung näher erläutert. Es zeigen:
- Fig. 1: eine schematische Seitenansicht eines Lasers mit Frequenzverdopplung, und
- Fig. 2: eine schematische Skizze einer alternativen Ausführungsform für einen nicht-linearen Kristall als frequenzverdoppelndes Element.

Eine Pumpeinrichtung 1 gibt über eine Laserdiode 2 Licht 3 auf eine Linse 4. Die Linse 4 koppelt das als Pumplicht dienende Licht 3 in einen Resonator R ein.

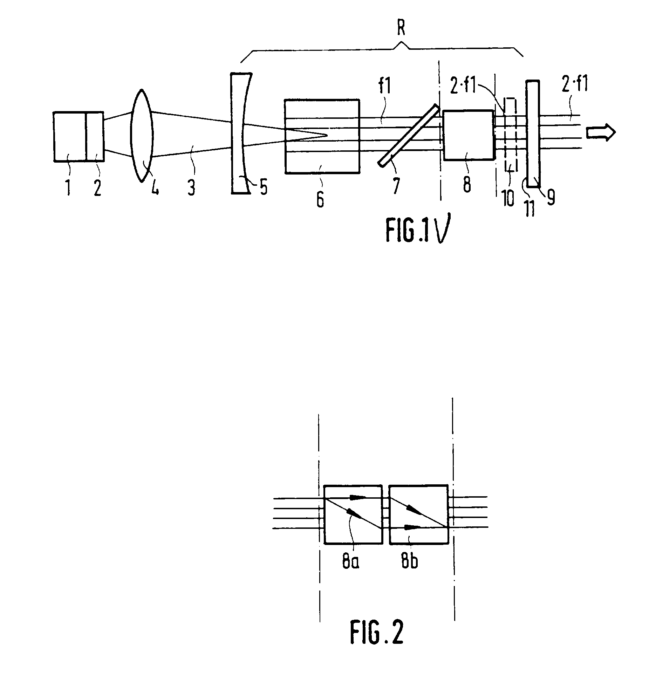

Der Resonator ist auf der linken Seite in Fig. 1 von einem konkaven Spiegel 5 begrenzt. Daran anschließend folgen in der dargestellten Reihenfolge ein Lasermedium 6, eine als Polarisator dienende Brewster-Platte 7, ein KTP als nicht-linearer Kristall 8, gegebenenfalls (optional) eine λ/4-Platte 10 und ein als Auskoppelspiegel dienender Planspiegel 9 mit einer zum Laserraum gerichteten Planspiegelfläche 11.

Durch das Pumplicht 3 wird in dem Lasermedium 6 eine Laserstrahlung mit der Frequenz f1 erzeugt. Dieses Licht wird von der Brewster-Platte 7 polarisiert, so daß linear polarisiertes Licht in den KTP gelangt, wo die Strahlen in zwei außerordentliche Teilstrahlen aufgeteilt werden. Das auf der anderen Seite des KTP 8 austretende Licht hat die Frequenz 2 x .f₁ . Dieses frequenzverdoppelte Laserlicht wird über den Auskoppelspiegel 9 ausgekoppelt und tritt in Fig. 1 auf der rechten Seite aus.

Bei dem Lasermedium 6 handelt es sich um einen dotierten Kristall, zum Beispiel Nd:YAG. Bei dem nicht-linearen Kristall handelt es sich hier um KTP. Stattdessen können jedoch auch andere, an sich bekannte nicht-lineare Kristalle verwendet werden, zum Beispiel KTA, KDP, BBO, LiNBO₃ , KNbO₃ , BaNaNBO₃ , LiIO ₃ , etc.

In einer abgewandelten Ausführungsform kann der in Fig. 1 dargestellten KTP 8 ersetzt werden durch die beiden in Fig. 2 dargestellten nicht-linearen Kristalle 8a und 8b, die bezüglich der Strahlenachse des Laserlichts um 90° gegeneinander verdreht angeordnet sind. Damit heben sich die Versetzungen in den einzelnen Kristallen 8a bzw. 8b gegeneinander auf, wie durch einzelne Pfeile für die eine Durchlaufrichtung der Laserstrahlen angedeutet ist. Bei dieser Ausführungsform ist der Auskoppelspiegel 9 vorzugsweise ebenfalls als Planspiegel ausgebildet, er kann jedoch auch - wie an sich bekannt - als Hohlspiegel ausgebildet sein.

## Patentansprüche

1. Laser, mit aus einer oder mehreren Laserdioden (2) gebildeten Pumplichtquelle (1, 2) und einem Resonator (R) mit folgenden Merkmalen:
einem ersten Spiegel (5), einem Lasermedium (6), einem Polarisator (7), mindestens einem nicht-linearen Kristall (8; 8a, 8b) zur Frequenzverdopplung vom Typ II, und einem zweiten, als Auskoppelspiegel diendenden Spiegel (9), **dadurch gekennzeichnet**, daß der zweite Spiegel (9) eine konkave Spiegelfläche (11) mit extrem großem Krümmungsradius aufweist, vorzugsweise als Planspiegel ausgebildet ist, und/oder zwei nicht-lineare Kristalle (8a, 8b) vorgesehen sind, die bezüglich der Strahlenachse um 90° gegeneinander verdreht angeordnet sind.

2. Laser nach Anspruch 1, **dadurch gekennzeichnet**, daß das Lasermedium (6) ein Festkörper, insbesondere ein dotierter Kristall ist.

3. Laser nach Anspruch 1 oder 2, **dadurch gekennzeichnet**, daß der zweite Spiegel (9) auf der dem Lasermedium (6) abgewandten Oberfläche des nicht-linearen Kristalls (8) angebracht ist.

4. Laser nach Anspruch 3, **dadurch gekennzeichnet**, daß der zweite Spiegel (9) eine auf dem nicht-linearen Kristall ausgebildete Verspiegelung ist, und/oder daß der erste Spiegel als Verspiegelung an einer Seite des Lasermediums (6) ausgebildet ist.

5. Laser nach einem der Ansprüche 1 bis 4, **dadurch gekennzeichnet**, daß der zweite Spiegel (9) des Resonators (R) für die frequenzverdoppelte Strahlung eine höhere Durchlässigkeit als für die Laserfrequenz aufweist.

## Claims

1. A laser having a pumped light source (1, 2) formed from one or more laser diodes (2) and a resonator (R) with the following features:
a first mirror (5), a laser medium (6), a polarizer (7), at least one nonlinear crystal (8; 8a, 8b) for type II frequency doubling, and a second mirror (9) serving as an output mirror, **characterized** in that the second mirror (9) has a concave mirror surface (11) with an extremely large radius of curvature, being preferably designed as a plane mirror, and/or two nonlinear crystals (8a, 8b) are provided which are staggered by 90° relative to the secondary optical axis.

2. The laser of claim 1, characterized in that the laser medium (6) is a solid, in particular a doped crystal.

3. The laser of claim 1 or 2, characterized in that the second mirror (9) is mounted on the surface of the nonlinear crystal (8) facing away from the laser medium (6).

4. The laser of claim 3, characterized in that the second mirror (9) is a mirror coating formed on the nonlinear crystal, and/or the first mirror is designed as a mirror coating on one side of the laser medium (6).

5. The laser of any of claims 1 to 4, characterized in that the second mirror (9) of the resonator (R) has a higher permeability for the frequency-doubled radiation than for the laser frequency.

## Revendications

1. Laser comprenant une source de lumière de pompage (1, 2) composée d'une ou plusieurs diodes lasers (2) et un résonateur (R) présentant les caractéristiques suivantes :
un premier miroir (5) un milieu actif (6), un polariseur (7), au moins un cristal non linéaire (8; 8a, 8b) pour le doublement de fréquence du type II, et un deuxième miroir (9) servant de miroir de sortie, caractérisé en ce que le deuxième miroir (9) présente une surface réfléchissante (11) concave à rayon de courbure extrêmement élevé, formé de préférence d'un miroir plan, et/ou en ce qu'il comprend deux cristaux non linéaires (8a, 8b) qui sont disposés tournés l'un par rapport à l'autre de 90° par rapport à l'axe du rayonnement.

2. Laser selon la revendication 1, caractérisé en ce que le milieu actif (6) est un corps solide, en particulier un cristal dopé.

3. Laser selon la revendication 1, caractérisé en ce que le deuxième miroir (9) est appliqué sur la surface du cristal non linéaire (8) opposée au milieu actif (6).

4. Laser selon la revendication 3, caractérisé en ce que le deuxième miroir (9) est formé d'une couche réfléchissante déposée sur le cristal non linéaire, et/ou le premier miroir est formé d'une couche réfléchissante déposée sur une face du milieu actif (6).

5. Laser selon l'une quelconque des revendications 1 à 4, caractérisé en ce que le deuxième miroir (9) du résonateur (R) présente une transparence plus élevée pour le rayonnement à fréquence doublée que pour la fréquence de laser.
